# EUROPÄISCHE PATENTSCHRIFT

(11) **EP 2 424 752 B1**
(45) Veröffentlichungstag und Bekanntmachung des Hinweises auf die Patenterteilung: **06.11.2013**
(21) Anmeldenummer: 10721727.5
(22) Anmeldetag: 28.04.2010
(51) Int. Cl.: B60R 21/231

(54) **GASSACK FÜR EIN FAHRZEUGINSASSEN-RÜCKHALTESYSTEM UND VERFAHREN ZUM HERSTELLEN EINES FAHRZEUGINSASSEN-RÜCKHALTESYSTEMS**
AIRBAG FOR A VEHICLE OCCUPANT RESTRAINT SYSTEM AND METHOD FOR THE PRODUCTION OF A VEHICLE OCCUPANT RESTRAINT SYSTEM
SAC À GAZ POUR SYSTÈME DE RETENUE D'OCCUPANTS D'UN VÉHICULE ET PROCÉDÉ DE PRODUCTION D'UN SYSTÈME DE RETENUE D'OCCUPANTS D'UN VÉHICULE

(30) Priorität: 28.04.2009 DE 102009019766
(43) Veröffentlichungstag der Anmeldung: 07.03.2012
(73) Patentinhaber: Takata AG, 63743 Aschaffenburg (DE)
(72) Erfinder: FELLER, Jens, 89171 Illerkirchberg (DE); SCHMIDT, Torsten, 13055 Berlin (DE); HEUSCHMID, Rainer, 89075 Ulm (DE)
(74) Vertreter: Staroske, Sandro
(86) Internationale Anmeldenummer: PCT/EP2010/055709
(87) Internationale Veröffentlichungsnummer: WO 2010/125099

(56) Entgegenhaltungen:
- DE-A1- 4 125 530
- DE-U1- 29 517 951
- US-A- 4 181 325
- US-A1- 2002 180 196

## Beschreibung

Die Erfindung betrifft einen Gassack für ein Fahrzeuginsassen-Rückhaltesystem eines Kraftfahrzeuges gemäß Anspruch 1, einen Gassack gemäß Anspruch 6 sowie ein Verfahren zum Herstellen eines Fahrzeuginsassen-Rückhaltesystems gemäß Anspruch 8.

Es ist bekannt, einen Gassack eines Fahrzeuginsassen-Rückhaltesystems aus mindestens zwei Lagen eines Gassackmaterials, z. B. eines textilen Gewebes, herzustellen. Die beiden Lagen werden über eine entlang ihres jeweiligen Umfangs verlaufende Naht so miteinander verbunden, dass zwischen den Lagen mindestens eine aufblasbare Kammer entsteht.

Die US 2002/180196 A1 beschreibt einen aufblasbaren Gassack für ein Rückhaltesystem eines Fahrzeugs, insbesondere eines Kraftfahrzeugs. Um die Bildung von Falten im aufgeblasenen Zustand zu vermeiden und leichtere Materialien zu verwenden, besteht der Gassack aus einem mehrschichtigen, textilen Verbundmaterial, das mindestens eine Schicht aus einem textilen Material und einer Schicht aus einem Polymermaterial, dessen Schmelzbereich niedriger als der Schmelzbereich des Textilmaterials ist, umfasst. Das Textilverbundmaterial wird in eine definierte dreidimensionale Form, die beim Aufblasen des Gassacks gebildet werden soll, gebracht.

Die US 4 181 325 A beschreibt einen Gassack, der aus einer einzigen Lage gewebtem Materials hergestellt wird. Der Gassack weist im aufgeblasenen Zustand eine obere Kammer auf, die geeignet ist, die Windschutzscheibe eines Fahrzeugs einzugreifen und eine untere Kammer in einer Position zwischen dem Fahrer und dem Lenkrad.

Weiterhin beschreibt die DE 41 25 530 A1 ein Luftkissen, das aus einer einzigen Materiallänge gebildet wird. Die Materiallänge wird an vorbestimmten Stellen gefaltet und mittels einer H-förmigen Naht zu einem Luftkissen verbunden.

Das von der Erfindung zu lösende Problem besteht darin, einen Gassack zu schaffen, der eine möglichst gut aufpralldämpfende Kontur besitzt und der dennoch einfach herstellbar ist.

Dieses Problem wird durch den Gassack mit den Merkmalen gemäß Anspruch 1, durch den Gassack mit den Merkmalen gemäß Anspruch 6 sowie durch das Verfahren mit den Merkmalen gemäß Anspruch 8 gelöst. Weiterbildungen der Erfindung sind in den abhängigen Ansprüchen angegeben.

Danach wird ein Seitengassack für ein Fahrzeuginsassen-Rückhaltesystem bereitgestellt, mit
- einer ersten und einer zweiten Lage aus einem Gassackmaterial;
- mindestens einer zwischen der ersten und der zweiten Lage ausgebildeten, zum Schutz eines Fahrzeuginsassen aufblasbaren Kammer; und
- mindestens einer Naht, über die die erste und die zweite Lage entlang zumindest eines Abschnitts ihres jeweiligen Umfangs miteinander verbunden sind, wobei
- sich der Seitengassack zwischen einem Fahrzeuginsassen und einer Fahrzeuglängsseite entfaltet.

Der Seitengassack und so ausgebildet, dass die Naht bei im Fahrzeug montiertem und aufgeblasenem Gassack entlang einer Ebene verläuft, die schräg oder quer zu einer durch die Fahrzeuglängs- und die Fahrzeughöhenrichtung aufgespannten Ebene orientiert ist, wobei die Naht jeweils entlang des gesamten Umfanges der ersten und der zweiten Lage verläuft.

Bei der Naht handelt es sich somit um eine Umfangsnaht, über die die beiden Lagen (insbesondere in Form zumindest näherungsweise deckungsgleicher Gassackzuschnitte) so miteinander verbunden sind, dass die zum Schutz des Fahrzeuginsassen aufblasbare Kammer durch die Lagen begrenzt ist, d.h. die Kammer erstreckt sich zwischen den beiden Lagen. Die Naht umgibt die aufblasbare Kammer vollständig.

Die Naht des erfindungsgemäßen Gassacks verläuft relativ zu einer Umfangsnaht eines im Fahrzeug eingebauten konventionellen Gassacks, die in einer durch die Fahrzeuglängs- und die Fahrzeughöhenrichtung aufgespannten Ebene (z.B. bei einem an oder in einem Fahrzeugsitz montierten Seitengassack oder einem Vorhanggassack) liegt, schräg bzw. quer. Insbesondere ist die Ebene, entlang derer sich die Naht erstreckt, zwar um eine Achse, die parallel zur Fahrzeughöhenrichtung weist, gegenüber der Ebene, die durch die Fahrzeuglängs- und die Fahrzeughöhenrichtung aufgespannt wird, verdreht, jedoch nicht um eine Achse, die parallel zur Fahrzeuglängsrichtung weist, verkippt. Mit anderen Worten verläuft insbesondere zwar die Fahrzeughöhenrichtung, nicht jedoch die Fahrzeuglängsrichtung parallel zu der Ebene, entlang derer sich die Naht erstreckt.

Durch diesen Nahtverlauf ist es möglich, bereits mittels der Naht die Kontur des Gassacks vorzugeben, insbesondere ohne dass zusätzliche konturdefinierende Mittel wie z. B. Fangbänder vorhanden sein müssen. Da ein Gassack üblicherweise entlang der Ebene der Umfangsnaht seine größte Ausdehnung im aufgeblasenen Zustand annimmt, kann bereits durch die Lage der Umfangsnaht (d.h. der Naht, die die erste und die zweite Lage miteinander verbindet) die Wirkdicke zumindest eines Abschnitts des Gassacks vorgegeben werden.

Durch die Orientierung der Naht quer zur Ebene, die durch die Fahrzeuglängs- und die Fahrzeughöhenrichtung aufgespannt wird, kann eine große Wirkdicke des Gassacks in Fahrzeugquerrichtung realisiert werden, z.B. ohne dass zusätzliche Mittel vorgesehen werden müssen, die die Ausdehnung des Gassacks in Fahrzeuglängsrichtung begrenzen.

In einer anderen Ausgestaltung der Erfindung sind die erste und die zweite Lage aus einem einstückigen, gefalteten Materialstück ausgebildet (Butterfly-Design), wobei die aufeinandergefalteten Abschnitte des Materialstückes mittels der Naht entlang ihres Umfanges (außerhalb der Faltkante) miteinander verbunden werden. Es ist jedoch auch denkbar, dass die erste und die zweite Lage aus zunächst separaten Materialstücken gebildet sind, die dann über die Naht miteinander verbunden werden. Selbstverständlich kann der Gassack auch mehr als zwei (z.B. aneinanderliegende) Lagen aufweisen, die über die Naht miteinander verbunden sind.

Insbesondere ist zudem auch möglich, dass die erste und die zweite Lage mehrere aufblasbare Kammern begrenzen, ohne dass zusätzliche, gesonderte Gassacklagen vorgesehen sind, z.B. indem zwischen den der ersten und der zweite Lage Trennmittel (z.B. ein Fangband) angeordnet werden.

Es wird darauf hingewiesen, dass die Naht, über die die erste und die zweite Lage miteinander verbunden sind, insbesondere eine Nähnaht ist. Es ist jedoch auch möglich, dass die Naht durch eine linienartige Klebverbindung realisiert ist.

Des Weiteren kann der erfindungsgemäße Gassack Befestigungsmittel zum Verbinden des Gassacks mit einem Gasgenerator zum Aufblasen des Gassacks aufweisen, die beabstandet zu der Naht angeordnet sind. Insbesondere sind die Befestigungsmittel durch mindestens eine Öffnung in der ersten oder der zweiten Lage ausgebildet, wobei die Öffnungen z.B. so beschaffen sind, dass Befestigungsbolzen zum Festlegen des Gasgenerators an dem Gassack durch sie hindurchgreifen können.

In einer anderen Weiterbildung weist der Gassack eine beabstandet zu der Naht, über die die erste und die zweite Lage miteinander verbunden sind, angeordnete Abströmöffnung auf, über die Gas aus dem Gassack in die Umgebung abströmen kann. Insbesondere ist diese Abströmöffnung so angeordnet, dass sie im montierten Gassack in Vorwärtsfahrtrichtung weist.

Der erfindungsgemäße Seitengassacks ist insbesondere in oder an einem Fahrzeugsitz bzw. in oder an einer Fahrzeugtür anzuordnen oder in Form eines Vorhanggassackes ausgebildet, der insbesondere entlang eines Dachholms des Fahrzeuges angebracht ist und der sich im aufgeblasenen Zustand entlang einer Fahrzeuglängsseite erstreckt, ausgebildet.

In einem zweiten Aspekt betrifft die Erfindung einen Seitengassack, mit
- einer ersten und einer zweiten Lage aus einem Gassackmaterial;
- mindestens einer zwischen der ersten und der zweiten Lage ausgebildeten, zum Schutz eines Fahrzeuginsassen aufblasbaren Kammer; und
- mindestens einer Naht, über die die erste und die zweite Lage entlang zumindest eines Abschnitts ihres jeweiligen Umfangs miteinander verbunden sind, wobei
- sich der Seitengassack im aufgeblasenen Zustand entlang einer Haupterstreckungsebene und zwischen einem Fahrzeuginsassen und einer Fahrzeuglängsseite erstreckt.

Erfindungsgemäß verläuft die Naht jeweils entlang des gesamten Umfanges der ersten und der zweiten Lage sowie entlang einer Ebene, die schräg oder quer zu der Haupterstreckungsebene orientiert ist.

Die Naht (Umfangsnaht), über die die erste und die zweite Lage miteinander verbunden sind, verläuft somit nicht wie die Naht eines konventionellen Gassacks entlang einer Ebene, die senkrecht zur Hauptwirkrichtung des Gassacks orientiert ist, sondern entlang einer Ebene, zu der die Hauptwirkrichtung des Gassacks nicht senkrecht steht. Die "Hauptwirkrichtung" des Gassacks ist die Richtung, in der der Gassack hauptsächlich Aufprallenergie absorbieren soll, wobei die Hauptwirkrichtung mit der Richtung zusammenfällt, in der bei einem Seiten- oder Frontaufprall die größte Krafteinwirkung auf den Fahrzeuginsassen zu erwarten ist.

Unter "Haupterstreckungsebene" wird diejenige Ebene verstanden, entlang derer der aufgeblasene Gassack seine größte Ausdehnung aufweist. Insbesondere wird die Haupterstreckungsebene bei einem Mehrkammergassack durch die Ebene größter Ausdehnung derjenigen Kammer, die das größte Volumen aufweist, bestimmt. Beispielsweise verläuft die Haupterstreckungsebene des Seitengassacks (Sitzgassack, Türgassack oder Vorhanggassack) zumindest näherungsweise entlang einer durch die Fahrzeuglängs- und die Fahrzeughöhenrichtung aufgespannten Ebene.

Gemäß einem anderen Aspekt der Erfindung entfaltet sich der Gassack entlang einer Hauptentfaltungsrichtung, wobei die Naht, über die die erste und die zweite Lage entlang zumindest eines Abschnitts ihres jeweiligen Umfangs miteinander verbunden sind, nicht senkrecht zur der Hauptentfaltungsrichtung orientiert ist. Mit der "Hauptentfaltungsrichtung" des Gassacks ist diejenige Richtung gemeint, in der der Gassack beim Entfalten die größte Änderung seiner Ausdehnung erfährt. Beispielsweise kann bei einem an einem Fahrzeugsitz angeordneten Seitengassack dessen Hauptentfaltungsrichtung näherungsweise in Vorwärtsfahrtrichtung weisen bzw. senkrecht zu einer Rückenlehne des Fahrzeugsitzes orientiert sein.

Die Erfindung betrifft auch ein Verfahren zum Herstellen eines Seitengassacks, wonach eine erste und eine zweite Lage eines Gassackmaterials über eine Naht entlang ihres gesamten jeweiligen Umfangs miteinander verbunden werden, wobei die erste und die zweite Lage so ausgebildet sind und miteinander verbunden werden, dass bei Anordnen des Seitengassacks in einem Fahrzeug derart, dass sich der Gassack zwischen einem Fahrzeuginsassen und einer Fahrzeugslängsseite entfaltet, die Naht entlang einer Ebene verläuft, die schräg oder quer zu einer durch die Fahrzeuglängs- und die Fahrzeughöhenrichtung aufgespannten Ebene orientiert ist.

Danach werden die erste und die zweite Gassacklage in Form von Zuschnitten bereitgestellt, die zum Herstellen des Gassacks entlang ihres jeweils äußeren Umfangs miteinander verbunden werden. Die Zuschnitte sind so beschaffen (z.B. nicht deckungsgleich oder nicht kreisförmig), dass der Gassack (z.B. in Form eines Seitengassacks) zwar wie ein konventioneller Gassack (d.h. ein Gassack mit konventionellem Nahtverlauf) im Fahrzeug angeordnet wird, die Naht, die die beiden Gassacklagen miteinander verbindet, jedoch schräg zur durch die Fahrzeuglängs- und die Fahrzeughöhenrichtung aufgespannten Ebene und/oder zur Haupterstreckungsebene des Gassacks verläuft.

Die Erfindung wird im Folgenden anhand von Ausführungsbeispielen unter Bezugnahme auf die Figuren näher erläutert. Es zeigen:
- Figur 1: einen konventionellen Gassack;
- Figur 2: einen Gassack gemäß einem ersten Ausführungsbeispiel der Erfindung;
- Figur 3: einen nicht erfindungsgemäßen Gassack;
- Fig. 4A - 4D: verschiedene Ansichten eines nicht erfindungsgemäßen Gassacks;
- Figur 5: eine Prinzipskizze zu einem nicht erfindungsgemäßen Gassack;
- Fig. 6A u. 6B: Ansichten eines nicht erfindungsgemäßen Gassacks;
- Figur 7: eine Seitenansicht eines Gassacks gemäß einem zweiten Ausführungsbeispiel der Erfindung; und
- Fig. 8A u. 8B: einen Gassack gemäß einem weiteren Ausführungsbeispiel der Erfindung.

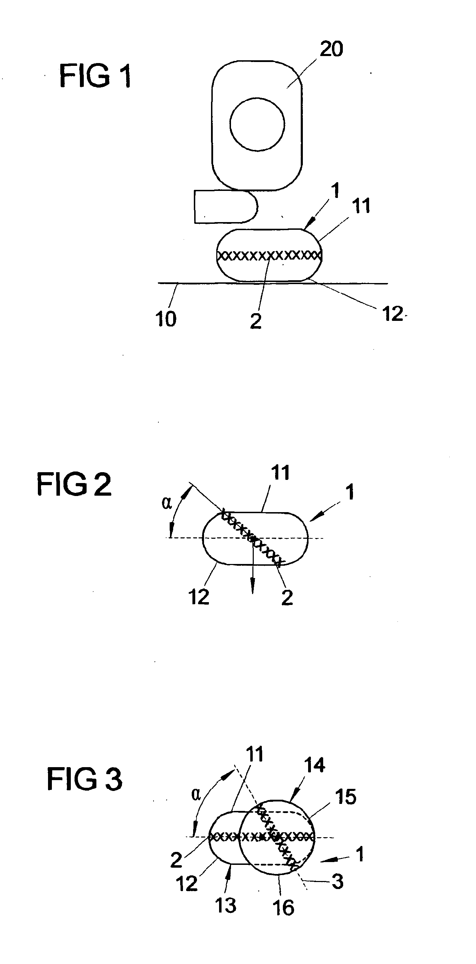

Figur 1 betrifft einen konventionellen Seitengassack 1, der sich im dargestellten aufgeblasenen Zustand zwischen einer Fahrzeugseitenstruktur 10 und einem zu schützenden Fahrzeuginsassen 20 erstreckt. Der Fahrzeuginsasse 20 befindet sich auf einem nicht dargestellten Fahrzeugsitz, wobei der Gassack 1 insbesondere in den Fahrzeugsitz oder in eine Fahrzeugtür der Fahrzeugseitenstruktur integriert ist.

Der konventionelle Gassack 1 weist eine erste Gassacklage 11 und eine zweite Gassacklage 12 auf, die mittels einer Umfangnaht 2 miteinander verbunden sind, so dass zwischen den Lagen 11, 12 eine aufblasbare Kammer ausgebildet ist. Der Gassack 1 ist so beschaffen und im Fahrzeug montiert, dass die Umfangsnaht 2 entlang einer Ebene, die durch die Fahrzeuglängsrichtung und die Fahrzeughöhenrichtung aufgespannt wird, verläuft, d.h. die senkrecht zur Wirkrichtung bzw. parallel zur Haupterstreckungsebene des Gassacks orientiert ist.

Durch diesen Verlauf der Umfangsnaht 2 weist der aufgeblasene Gassack in Richtung der Fahrzeuglängsachse seine größte Ausdehnung auf. Um die Wirkdicke des Gassacks zwischen dem Fahrzeuginsassen und der Fahrzeugseitenstruktur, d.h. entlang der Fahrzeugquerrichtung, zu erhöhen, können Fangbänder oder Abnäher (nicht dargestellt) vorgesehen sein, die die Ausdehnung des Gassacks in Fahrzeuglängsrichtung begrenzen und dadurch eine größere Ausdehnung des aufgeblasenen Gassacks in Fahrzeugquerrichtung bewirken.

Figur 2 zeigt schematisch einen erfindungsgemäßen Gassack 1, der wie der Gassack aus Figur 1 zwei Gassacklagen 11, 12 aufweist, die mittels einer Umfangsnaht 2, die entlang eines Abschnittes des Umfanges der jeweiligen Lage verläuft, miteinander verbunden sind.

Im Unterschied zur Figur 1 verläuft die Naht 2 bei im Fahrzeug montiertem Gassack jedoch nicht entlang einer Ebene, die durch die Fahrzeuglängs- und Fahrzeughöhenrichtung aufgespannt wird, sondern entlang einer Ebene, die unter einem Winkel α schräg zu dieser Ebene orientiert ist. Im gezeigten Beispiel ist die Ebene, entlang derer die Naht 2 verläuft, gewissermaßen gegenüber der durch die Fahrzeuglängs- und Fahrzeughöhenrichtung aufgespannten Ebene um den Winkel α um eine zur Fahrzeughöhenrichtung parallele Achse verdreht.

Die Erfindung ist natürlich nicht auf eine bestimmte Orientierung der Naht schräg zum konventionellen Nahtverlauf beschränkt, sondern es sind im Prinzip beliebige Nahtverläufe schräg zur durch die Fahrzeuglängs- und Fahrzeughöhenrichtung aufgespannten Ebene denkbar. Beispielsweise kann der Winkel α 0° bis 180 ° betragen.

Zudem kann die Ebene, entlang derer sich die Naht 2 erstreckt, auch dadurch gebildet gedacht werden, dass die Ebene entlang derer sich die konventionelle Naht erstreckt, d.h. die durch die Fahrzeuglängs- und Fahrzeughöhenrichtung aufgespannte Ebene, zusätzlich oder alternativ zu der Drehung um eine Achse in Fahrzeughöhenrichtung um eine Achse, die parallel zur Fahrzeuglängsrichtung verläuft, und/oder um eine Achse, die parallel zur Fahrzeugquerrichtung verläuft, gedreht werden.

Darüber hinaus muss der Drehpunkt, um den die Ebene der konventionellen Naht gedreht wird, nicht auf einer Symmetrieachse des Gassacks liegen, sondern kann auch an dessen Rand oder auch außerhalb des Gassacks liegen, so dass die Erfindung allgemein Gassäcke betrifft, die eine Verbindungsnaht zwischen der ersten und der zweiten Lage aufweisen, die entlang einer Ebene verläuft, die in irgendeiner Weise schräg oder quer zu einer durch die Fahrzeuglängs- und Fahrzeughöhenrichtung aufgespannten Ebene orientiert ist.

Figur 3 zeigt anhand eines nicht erfindungsgemäßen Beispiels schematisch, dass es auch möglich ist, mehr als eine Umfangsnaht, die Lagen des Gassacks miteinander verbindet, vorzusehen, wobei die Umfangsnähte unterschiedlich orientiert sein können. Im Beispiel der Figur 3 weist der Gassack 1 einen unteren Abschnitt 13, der z. B. als aufblasbare Kammer des Gassacks ausgebildet ist, sowie einen oberen Abschnitt 14, der z. B. eine weitere Kammer des Gassacks bildet, auf. Der obere und der untere Abschnitt 13, 14 können jedoch eine gemeinsame Kammer des Gassacks ausbilden.

Der untere Abschnitt 13 wird durch die erste und zweite Lage 11, 12 gebildet, die entlang einer ersten Umfangsnaht 2 miteinander verbunden sind. Die Umfangsnaht 2 verläuft wie im konventionellen Gassack parallel zu einer Ebene, die durch die Fahrzeuglängs- und Fahrzeughöhenrichtung aufgespannt ist.

Der obere Abschnitt 14 des Gassacks 1 ist durch zwei weitere Lagen 15, 16 gebildet, die über eine zweite Umfangsnaht 3 miteinander verbunden sind. Es ist denkbar, dass die Gassacklagen 11 und 15 sowie 12 und 16 einstückig miteinander ausgebildet sind, d. h. diese Lagen jeweils eine durchgehende Lage bilden.

Die zweite Umfangsnaht 3 verläuft entlang einer Ebene, die gegenüber der durch die Fahrzeuglängs- und Fahrzeughöhenrichtung gebildeten Ebene, und damit relativ zu der ersten Umfangsnaht 2, um einen Winkel α verdreht ist, so dass der obere Abschnitt 14 des Gassacks gegenüber dem unteren Gassackabschnitt 13 gewissermaßen verdrillt ist. Es wird darauf hingewiesen, dass das Prinzip der Figuren 1 bis 3 analog auch in anderen Gassacktypen verwendet werden kann, z.B. in einem Vorhang-, Fahrer-, Beifahrer- oder Kniegassack.

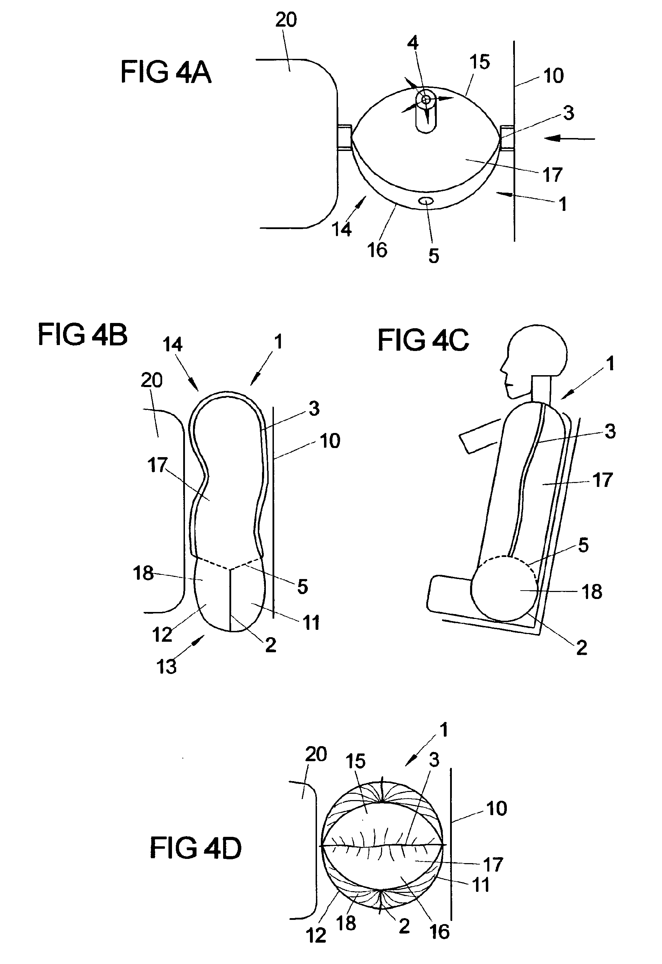

Die Figuren 4A bis 4D zeigen verschiedene Ansichten eines nicht erfindungsgemäßen Gassacks 1, der auf dem Prinzip der Figur 3 basiert. Im Einzelnen zeigt Fig. 4A eine Schnittansicht durch den oberen Abschnitt 14 des aufgeblasenen Seitengassacks 1, der sich zwischen dem Fahrzeuginsassen 20 und der Fahrzeugseitenstruktur 10 erstreckt. Figur 4B zeigt eine Ansicht des Gassacks 1 von der Fahrzeugfront her, Figur 4C eine Seitenansicht von der Fahrzeugseitenstruktur 10 aus gesehen und Figur 4D eine Ansicht des Gassacks von oben.

Der Gassack 1 weist ebenfalls einen unteren Abschnitt 13 auf, wobei die Gassacklagen 11, 12 des unteren Abschnitts 13 entlang der ersten Umfangsnaht 2 und Gassacklagen 15 und 16 des oberen Abschnittes 14 entlang der zweiten Umfangsnaht 3 miteinander verbunden sind. Der obere Abschnitt 14 weist im montierten Gassack zum Fahrzeughimmel und erstreckt sich insbesondere entlang einer Rückenlehne eines Fahrzeugsitzes, auf dem sich der zu schützende Fahrzeuginsasse befindet.

Die erste Umfangsnaht 2 ist entlang einer Ebene orientiert, die durch die Fahrzeuglängsund die Fahrzeughöhenrichtung aufgespannt wird, während die zweite Umfangsnaht 3 entlang einer Ebene verläuft, die quer zu der durch die Fahrzeuglängs- und die Fahrzeughöhenrichtung aufgespannten Ebene verläuft. Insbesondere verläuft die zweite Umfangsnaht 3 entlang einer Ebene, die näherungsweise parallel zur Rückenlehne des Fahrzeugsitzes orientiert ist.

Gemäß Figur 4A wird durch die mittels der Umfangsnaht 3 miteinander verbundenen Gassacklagen 15 und 16 des oberen Abschnitts 14 eine aufblasbare obere Kammer 17 begrenzt. Im Bereich der oberen Kammer 17 befindet sich ein Gasgenerator 4, der über Befestigungsbolzen (nicht dargestellt), die durch Öffnungen in der Gassacklage 15 hindurchgreifen, mit einer Fahrzeugstruktur (insbesondere einer Rückenlehne eines Fahrzeugsitzes) verbunden ist.

Des Weiteren ist im Bereich der oberen Kammer 17 des Gassacks eine Ausströmöffnung 5 vorgesehen, über die Gas aus der oberen Kammer in die Umgebung abströmen kann. Die Ausströmöffnung 5 befindet sich in der zur Fahrzeugfront weisenden Gassacklage 16 und somit beabstandet zu der Umfangsnaht 3.

Der obere Abschnitt 14 des Gassacks, d. h. die obere Kammer 17, ist von dem unteren Bereich 13 des Gassacks über eine Trennnaht 5 abgetrennt, so dass durch die Gassacklagen 11 und 12, die über die erste Umfangsnaht 2 miteinander verbunden sind, eine weitere, untere Kammer 18 definiert wird. Durch die unterschiedlichen Orientierungen der ersten und der zweiten Umfangsnaht 2, 3 ist die obere Kammer 17 gegenüber der unteren Kammer 18 verdreht.

Zudem besitzt die obere Kammer 17 im aufgeblasenen Zustand des Gassacks 1 bedingt durch den Verlauf der Umfangsnaht 3 entlang einer Ebene quer zur Fahrzeuglängsrichtung, d.h. in Wirkrichtung des Gassacks, eine größere Dicke als die untere Kammer 18, deren Umfangsnaht 2 sich entlang einer Ebene, die durch die Fahrzeuglängs- und Fahrzeughöhenrichtung aufgespannt ist, erstreckt. Die untere Kammer 18 besitzt durch den Verlauf der Naht 2 entlang der Fahrzeuglängsrichtung ihre größte Ausdehnung.

Es wird darauf hingewiesen, dass die Naht 5, die den oberen Abschnitt 14 des Gassacks von dem unteren Abschnitt 13 abtrennt, optional ist. Es ist auch denkbar, dass der obere und der untere Abschnitt des Gassacks eine gemeinsame Kammer ausbilden. Zumindest ist es denkbar, dass die obere Kammer 17 mit der unteren Kammer 18 über Überströmmittel, z. B. in Form einer Unterbrechung der Naht 5, in Strömungsverbindung miteinander stehen.

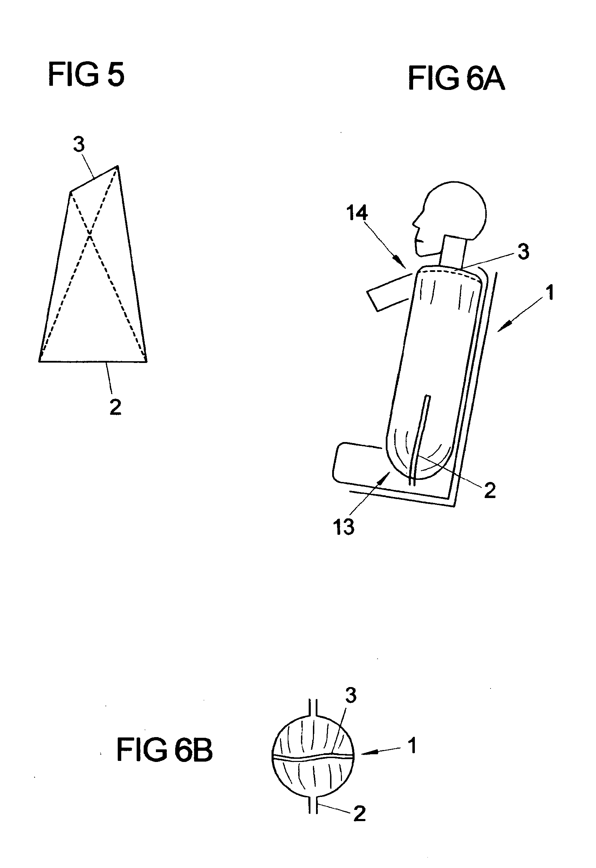

Das Prinzip, dass der obere Abschnitt des Gassacks gegenüber dem unteren Abschnitt des Gassacks verdreht ist, ist in Fig. 5 angedeutet, die nur die beiden gegeneinander verdrehten Nähte 2, 3 zeigt.

Die Figuren 6A und 6B zeigen eine Seitenansicht bzw. eine Draufsicht eines derartigen (nicht erfindungsgemäßen) Gassacks, dessen unterer Abschnitt 13 die erste Umfangsnaht 2, die entlang einer Ebene quer zur Ebene, die durch die Fahrzeuglängs- und Fahrzeughöhenrichtung aufgespannten ist, verläuft, und dessen oberer Abschnitt 14 die zweite Umfangsnaht 3, die entlang der aus Fahrzeuglängsrichtung und Fahrzeughöhenrichtung gebildeten Ebene verläuft, aufweist. Der obere und der untere Abschnitt 13, 14 des Gassacks bilden insbesondere eine gemeinsame Kammer aus.

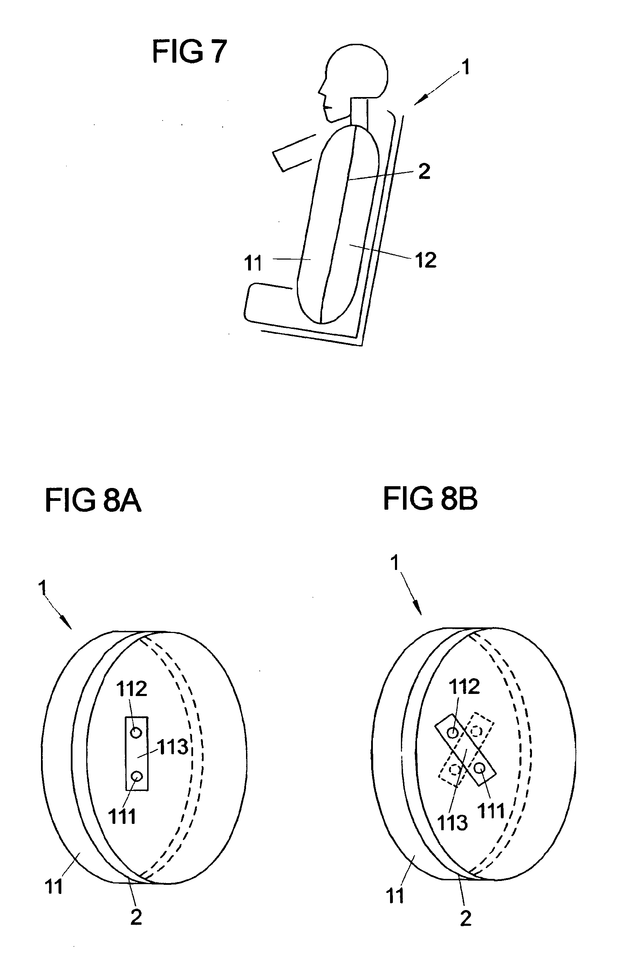

Die Figur 7 betrifft ein weiteres Ausführungsbeispiel eines erfindungsgemäßen Gassacks 1. Der Gassack 1 weist zwei Gassacklagen 11, 12 auf, die entlang einer einzigen, umlaufenden Umfangsnaht 2 miteinander verbunden sind, so dass durch die beiden Gassacklagen 11, 12 und die Umfangsnaht 2 eine einzige Kammer des Gassacks begrenzt ist.

Es ist natürlich auch denkbar, dass die Gassacklagen 11, 12 und die umlaufende Umfangsnaht 2 mehrere Kammern des Gassacks begrenzen, z. B. dadurch, dass zwischen den Lagen 11, 12 Trennmittel, beispielsweise in Form eines Bandes oder eines Abnähers, vorgesehen sind, so dass zwischen den Lagen 11, 12 mehrere aufblasbare Kammern entstehen. Die umlaufende Naht 2 erstreckt sich gemäß dem Beispiel der Fig. 7 im aufgeblasenen Zustand des Gassacks 1 entlang einer Ebene, die quer zu einer aus der Fahrzeuglängs- und Fahrzeughöhenrichtung aufgespannten Ebene und parallel zur Rückenlehne des Fahrzeugsitzes, auf dem sich der zu schützende Fahrzeuginsasse befindet, orientiert ist.

Figuren 8A und 8B betreffen eine Abwandlung des Ausführungsbeispiels aus Figur 7, wobei ein Schnitt durch den Gassack gezeigt ist. Der Gassack 1 weist Befestigungsmittel in Form zweier Öffnungen 111, 112 in der ersten Gassacklage 11 auf, die zum Verbinden des Gassacks 1 mit einem Gasgenerator (nicht dargestellt) dienen. Im Bereich der Öffnungen 111, 112 ist zudem eine Verstärkungslage 113, z. B. aus einem Gassackmaterial, mit der ersten Lage 11 verbunden.

Gemäß Figur 8A sind die Öffnungen 111, 112 - bezogen auf den montierten Zustand des Gassacks - entlang der Fahrzeughöhenrichtung übereinander angeordnet. Im Beispiel der Figur 8B sind die Öffnungen 111, 112 und die Verstärkungslage 113 jedoch verdreht, d. h. entlang einer Achse, die schräg zur Fahrzeughöhenrichtung verläuft, angeordnet.

Es wird darauf hingewiesen, dass Elemente der verschiedenen, oben beschriebenen Ausführungsbeispiele selbstverständlich auch in Kombination miteinander verwendet werden können, z. B. kann die in den Figuren 8A und 8B gezeigte Anordnung zum Befestigen eines Gasgenerators auch mit Elementen der übrigen Ausführungsbeispiele verwendet werden.

### Bezugszeichenliste

- 1: Seitengassack
- 2, 3: Naht
- 4: Gasgenerator
- 5: Ausströmöffnung
- 10: Fahrzeugseitenstruktur
- 11: erste Lage
- 12: zweite Lage
- 13: unter Abschnitt
- 14: oberer Abschnitt
- 15, 16: weitere Lagen
- 17: obere Kammer
- 18: untere Kammer
- 20: Fahrzeuginsasse
- 111, 112: Öffnung
- 113: Verstärkungslage

## Patentansprüche

1. Seitengassack für ein Fahrzeuginsassen-Rückhaltesystem eines Kraftfahrzeuges, mit
- mindestens einer ersten und einer zweiten Lage (11, 12) aus einem Gassackmaterial;
- mindestens einer zwischen der ersten und der zweiten Lage (11, 12) ausgebildeten, zum Schutz eines Fahrzeuginsassen (20) aufblasbaren Kammer (18); und
- mindestens einer Naht (2), über die die erste und die zweite Lage (11, 12) entlang zumindest eines Abschnitts ihres jeweiligen Umfangs miteinander verbunden sind, wobei
- sich der Seitengassack zwischen einem Fahrzeuginsassen und einer Fahrzeuglängsseiteentfaltet,
**dadurch gekennzeichnet, dass**
der Seitengassack (1) so ausgebildet ist, dass die Naht (2) bei montiertem und aufgeblasenem Seitengassack entlang einer Ebene verläuft, die schräg oder quer zu einer durch die Fahrzeuglängs- und die Fahrzeughöhenrichtung aufgespannten Ebene orientiert ist, wobei die Naht (2) jeweils entlang des gesamten Umfanges der ersten und der zweiten Lage (11, 12) verläuft.

2. Seitengassack nach Anspruch 1, **dadurch gekennzeichnet, dass** die Fahrzeughöhenrichtung bei montiertem und aufgeblasenem Seitengassack zumindest näherungsweise parallel zu der Ebene, entlang derer sich die Naht (2) erstreckt, verläuft.

3. Seitengassack nach Anspruch 1 oder 2, **dadurch gekennzeichnet, dass** die erste und die zweite Lage (11, 12) mehrere aufblasbare Kammern begrenzen.

4. Seitengassack nach einem der vorhergehenden Ansprüche, **dadurch gekennzeichnet, dass** die erste und die zweite Lage (11, 12) aus einem einstückigen, gefalteten Materialstück ausgebildet sind.

5. Seitengassack nach einem der vorhergehenden Ansprüche, **gekennzeichnet durch** Befestigungsmittel zum Verbinden des Seitengassacks (1) mit einem Gasgenerator (4) zum Aufblasen des Seitengassacks, wobei die Befestigungsmittel beabstandet zu der Naht (2) angeordnet sind.

6. Seitengassack für ein Fahrzeuginsassen-Rückhaltesystem eines Kraftfahrzeuges, insbesondere nach einem der vorhergehenden Ansprüche, mit
- mindestens einer ersten und einer zweiten Lage (11, 12) aus einem Gassackmaterial;
- mindestens einer zwischen der ersten und der zweiten Lage (11, 12) ausgebildeten, zum Schutz eines Fahrzeuginsassen (20) aufblasbaren Kammer (18); und
- mindestens einer Naht (2), über die die erste und die zweite Lage (11, 12) entlang zumindest eines Abschnitts ihres jeweiligen Umfangs miteinander verbunden sind, wobei sich der Seitengassack im aufgeblasenen Zustand entlang einer Haupterstreckungsebene und zwischen einem Fahrzeuginsassen und einer Fahrzeuglängsseite erstreckt,
**dadurch gekennzeichnet, dass**
die Naht (2) jeweils entlang des gesamten Umfanges der ersten und der zweiten Lage (11, 12) sowie entlang einer Ebene verläuft, die schräg oder quer zu der Haupterstreckungsebene orientiert ist.

7. Seitengassack nach Anspruch 6, **dadurch gekennzeichnet, dass** der Seitengassack in oder an einem Fahrzeugsitz des Fahrzeuges anzuordnen ist.

8. Verfahren zum Herstellen eines Seitengassacks, wonach eine erste und eine zweite Lage (11, 12) eines Gassackmaterials über eine Naht (2) entlang ihres gesamten jeweiligen Umfangs miteinander verbunden werden,
**dadurch gekennzeichnet, dass**
die erste und die zweite Lage so ausgebildet sind und miteinander verbunden werden, dass bei Anordnen des Seitengassacks in einem Fahrzeug derart, dass sich der Seitengassack zwischen einem Fahrzeuginsassen und einer Fahrzeuglängsseite entfaltet, die Naht (2) entlang einer Ebene verläuft, die schräg oder quer zu einer durch die Fahrzeuglängs- und die Fahrzeughöhenrichtung aufgespannten Ebene orientiert ist.

## Claims

1. A side airbag for a vehicle occupant restraint system of a motor vehicle, comprising
- at least one first and one second layer (11, 12) of an airbag material;
- at least one chamber (18) formed between the first and the second layer (11, 12), which is inflatable for the protection of a vehicle occupant (20); and
- at least one seam (2), by which the first and the second layer (11, 12) are connected with each other along at least a portion of their respective circumference, wherein
- the side airbag is deployed between a vehicle occupant and a long side of the vehicle,
**characterized in that**
the side airbag (1) is formed such that when the side airbag is mounted and inflated, the seam (2) runs along a plane which is oriented obliquely or transversely to a plane spanned by the longitudinal and the height direction of the vehicle, wherein the seam (2) each runs along the entire circumference of the first and the second layer (11, 12).

2. The side airbag according to claim 1, **characterized in that** when the side airbag is mounted and inflated, the height direction of the vehicle runs at least approximately parallel to the plane along which the seam (2) extends.

3. The side airbag according to claim 1 or 2, **characterized in that** the first and the second layer (11, 12) define a plurality of inflatable chambers.

4. The side airbag according to any of the preceding claims, **characterized in that** the first and the second layer (11, 12) are formed of an integral, folded piece of material.

5. The side airbag according to any of the preceding claims, **characterized by** fastening means for connecting the side airbag (1) with a gas generator (4) for inflating the side airbag, wherein the fastening means are arranged at a distance to the seam (2).

6. A side airbag for a vehicle occupant restraint system of a motor vehicle, in particular according to any of the preceding claims, comprising
- at least one first and one second layer (11, 12) of an airbag material;
- at least one chamber (18) formed between the first and the second layer (11, 12), which is inflatable for the protection of a vehicle occupant (20); and
- at least one seam (2), by which the first and the second layer (11, 12) are connected with each other along at least a portion of their respective circumference, wherein the side airbag in the inflated condition extends along a main plane of extension and between a vehicle occupant and a long side of the vehicle,
**characterized in that**
the seam (2) each runs along the entire circumference of the first and the second layer (11, 12) as well as along a plane which is oriented obliquely or transversely to the main plane of extension.

7. The side airbag according to claim 6, **characterized in that** the side airbag is to be arranged in or on a vehicle seat of the vehicle.

8. A method for producing a side airbag, according to which a first and a second layer (11, 12) of an airbag material are connected with each other via a seam (2) along their entire respective circumference,
**characterized in that**
the first and the second layer are formed and connected with each other such that when the side airbag is arranged in a vehicle such that the side airbag is deployed between a vehicle occupant and a long side of the vehicle, the seam (2) extends along a plane which is oriented obliquely or transversely to a plane spanned by the longitudinal and the height direction of the vehicle.

## Revendications

1. Sac à gaz latéral pour un système de retenue d'occupant d'un véhicule automobile, avec :
- au moins une première et une seconde couche (11, 12) en un matériau de sac à gaz ;
- au moins une chambre (18) gonflable pour la protection d'un occupant du véhicule (20), formée entre la première et la seconde couche (11, 12) ; et
- au moins une couture (2) reliant la première et la seconde couche (11, 12) le long d'au moins une portion de leur périphérique respective,
- le sac à gaz latéral se déployant entre un occupant du véhicule et un côté longitudinal du véhicule,
**caractérisé en ce que**
le sac à gaz latéral (1) est réalisé de sorte que, lorsqu'il est monté et gonflé, la couture (2) s'étende le long d'un plan qui est orienté en biais ou transversalement à un plan défini par la direction longitudinale et la direction verticale du véhicule, la couture (2) s'étendant respectivement le long de la périphérie entière de la première et de la seconde couche (11, 12).

2. Sac à gaz latéral selon la revendication 1, **caractérisé en ce que** la direction verticale du véhicule s'étend, lorsque le sac à gaz latéral est monté et gonflé, au moins approximativement parallèlement au plan, le long duquel la couture (2) s'étend.

3. Sac à gaz latéral selon la revendication 1 ou 2, **caractérisé en ce que** la première et la seconde couche (11, 12) délimitent plusieurs chambres gonflables.

4. Sac à gaz latéral selon l'une quelconque des revendications précédentes, **caractérisé en ce que** la première et la seconde couche (11, 12) sont réalisées à partir d'un morceau de matériau d'un seul tenant plié.

5. Sac à gaz latéral selon l'une quelconque des revendications précédentes, **caractérisé par** des moyens de fixation pour la liaison du sac à gaz latéral (1) avec un générateur de gaz (4) pour le gonflage du sac à gaz latéral, les moyens de fixation étant disposés à distance de la couture (2).

6. Sac à gaz latéral pour un système de retenue d'occupant d'un véhicule automobile, notamment selon l'une quelconque des revendications précédentes, avec
- au moins une première et une seconde couche (11, 12) en un matériau de sac à gaz ;
- au moins une chambre (18) gonflable pour la protection d'un occupant du véhicule (20), formée entre la première et la seconde couche (11, 12) ; et
- au moins une couture (2) reliant la première et la seconde couche (11, 12) le long d'au moins une portion de leur périphérique respective, le sac à gaz latéral s'étendant à l'état gonflé le long d'un plan d'étendue principale et entre un occupant du véhicule et un côté longitudinal du véhicule,
**caractérisé en ce que**
la couture (2) s'étend respectivement le long de la périphérie entière de la première et la seconde couche (11, 12) ainsi que le long d'un plan qui est orienté en biais ou transversalement au plan d'étendue principale.

7. Sac à gaz latéral selon la revendication 6, **caractérisé en ce que** le sac à gaz latéral est à disposer dans ou sur un siège du véhicule.

8. Procédé de fabrication d'un sac à gaz latéral, selon lequel une première et une seconde couche (11, 12) d'un matériau de sac à gaz sont reliées par une couture (2) le long de leur périphérie entière respective,
**caractérisé en ce que** la première et la seconde couche sont réalisées et reliées de sorte que lors de la disposition du sac à gaz latéral dans un véhicule de telle manière que le sac à gaz latéral se déploie entre un occupant du véhicule et un côté longitudinal du véhicule, la couture (2) s'étende le long d'un plan qui est orienté en biais ou transversalement à un plan défini par la direction longitudinale et la direction verticale du véhicule.
